# EUROPEAN PATENT APPLICATION

(11) **EP 1 973 317 A2**
(43) Date of publication of application: **24.09.2008**
(21) Application number: 08250956.3
(22) Date of filing: 19.03.2008
(51) Int. Cl.: H04M 1/725

(54) **Communication apparatus**

(30) Priority: 23.03.2007 JP 2007077534
(71) Applicant: Brother Kogyo Kabushiki Kaisha, Nagoya-shi, Aichi-ken 467-8561 (JP)
(72) Inventor: Kitagawa, Isamu, Nagoya-shi, Aichi-ken 467-8562 (JP)
(74) Representative: Smith, Samuel Leonard

(57) **Abstract**

A communication apparatus including, a main device (1) having a rest portion (10) and communicable with an external device, and a wireless device (2) which is permitted to be placed on the rest portion and is communicable with the main device through a wireless communication so as to be communicable with the external device via the main device, the communication apparatus being characterized in that: the communication apparatus is configured to establish a wired connection between the wireless device and the main device when the wireless device is placed on the rest portion of the main device.

## Description

### CROSS REFERENCE TO RELATED APPLICATION

The present application claims priority from Japanese Patent Application No. 2007-077534, which was filed on March 23, 2007, the disclosure of which is herein incorporated by reference in its entirety

### BACKGROUND OF THE INVENTION

### Field of the Invention

The present invention relates to a communication apparatus.

### Description of the Related Art

Recently, networking in offices and homes has progressed. This allows a data communication in a wireless LAN system at a transmission speed equal to or higher than that in a wired communication system. Thus, various apparatuses and devices in each of which the wireless LAN system is incorporated are developed. Japanese Patent Application Publication No. 2006-311109 discloses, as an example of one of the apparatuses and devices, a communication apparatus having a wireless LAN function and a wireless phone function.

### SUMMARY OF THE INVENTION

However, a wireless LAN and a digital wireless phone may use the same frequency band. Thus, radio waves generated by the digital wireless phone adversely affect a wireless LAN around the digital wireless phone, and vice versa. This leads to an uncomfortable environment for communicating.

In particular, in a communication apparatus, e.g., a wireless (cordless) phone, including a main device and a wireless (cordless) device which are connectable to each other through a wireless communication, radio waves are frequently transmitted in order to check and establish a connection between the main device and the wireless device. Thus, the radio waves generated by such a communication apparatus adversely and severely affect other communication apparatuses which carry out a communication via a wireless LAN, for example.

Illustrative aspects of the present invention may provide a communication apparatus that less affects other communication apparatuses when compared to a conventional communication apparatus.

In one aspect, the communication apparatus includes: a main device having a rest portion and communicable with an external device; and a wireless device which is permitted to be placed on the rest portion and is communicable with the main device through a wireless communication so as to be communicable with the external device via the main device, wherein the communication apparatus is configured to establish a wired connection between the wireless device and the main device when the wireless device is placed on the rest portion of the main device.

In the communication apparatus constructed as described above, interference of the radio waves between the communication apparatus and other wireless apparatuses may be prevented when the wireless device is placed on the rest portion.

### BRIEF DESCRIPTION OF THE DRAWINGS

The objects, features, advantages, and technical and industrial significance of the present invention will be better understood by reading the following detailed description of embodiments of the invention, when considered in connection with the accompanying drawings, in which:
Figs. 1A and 1B are schematic views of a communication apparatus in the form of a wireless phone as an embodiment of the present invention;
Fig. 2 is a block diagram showing a control system of a base unit of the wireless phone;
Fig. 3 is a block diagram showing a control system of a handset of the wireless phone;
Fig. 4 is a flow-chart indicating a flow of a digital wireless communication controlling processing of the base unit;
Fig. 5 is a flow-chart indicating a flow of a digital wireless communication controlling processing of the handset;
Fig. 6 is a flow-chart indicating a flow of a radio wave condition checking processing of the base unit; and
Fig. 7 is a perspective view of a communication apparatus in the form of a multi-function apparatus as another embodiment of the present invention.

### DETAILED DESCRIPTION OF EMBODIMENTS

Hereinafter, there will be described embodiments of the present invention by reference to the drawings. It is to be understood that the following embodiments are described only by way of example, and the invention may be otherwise embodied with various modifications without departing from the scope and spirit of the invention.

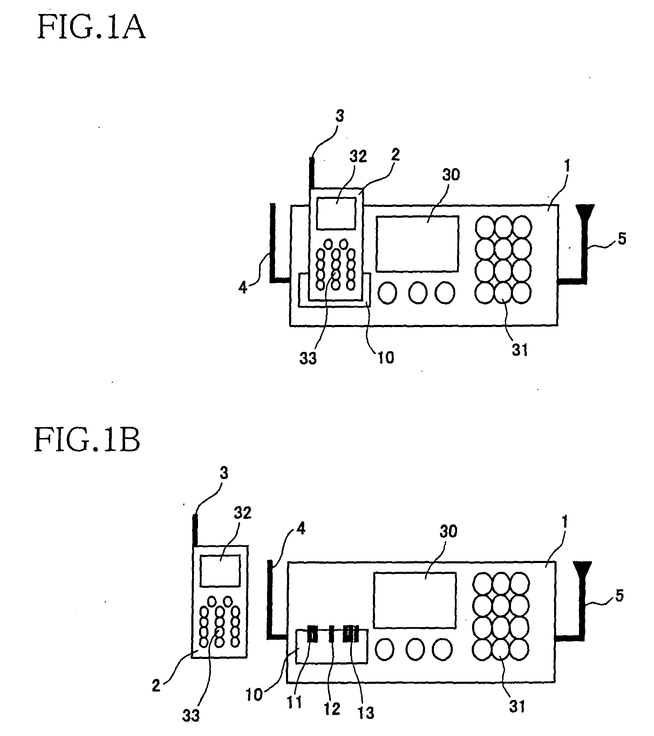

Figs. 1A and 1B are schematic views of a communication apparatus in the form of a wireless (cordless) phone as an embodiment of the present invention. This communication apparatus is configured to be communicable with an external device through a voice communication and further configured to be communicable, via a wireless LAN, with an external wireless LAN device different from the external device.

Fig. 1A shows a state in which a handset 2 is placed on a base unit 1. Fig. 1B shows a state in which the handset 2 is removed from the base unit 1. The base unit 1 is communicable with the external device. As shown in Fig. 1A, the base unit 1 includes a digital wireless antenna portion 4 for transmitting and receiving data to and from the handset 2 in the voice communication without using any wires, that is, through a wireless communication, a wireless LAN antenna portion 5 for transmitting and receiving data in communicating with the external wireless LAN device, a display portion 30 for displaying a state of the communication apparatus, and an operation portion 31 through which the communication apparatus is operated by a user. The handset 2 includes a digital wireless antenna portion 3 for transmitting and receiving data to and from the base unit 1 in the voice communication. That is, the handset 2 is communicable with the base unit 1 through the wireless communication so as to be communicable with the external device via the base unit 1.

Further, the base unit 1 is provided with a rest portion 10 on which the handset 2 can be placed. The rest portion 10 is provided with a handset charging portion 11 through which electricity is supplied from the base unit 1 to the handset 2 in charging of the same 2, a handset placement detecting portion 12 for detecting a connection of the handset 2 to the base unit 1, and a handset wired connection portion 13 for establishing a wired connection between the base unit 1 and the handset 2. When the handset 2 is placed on the rest portion 10, the base unit 1 and the handset 2 are electrically connected to each other. This permits a wired communication between the base unit 1 and the handset 2. In other words, the communication apparatus is configured to establish the wired connection between the handset 2 and the base unit 1.

Further, the handset 2 is provided with a display portion 32 for displaying a state of the handset 2, and an operation portion 33 through which the handset 2 is operated by a user.

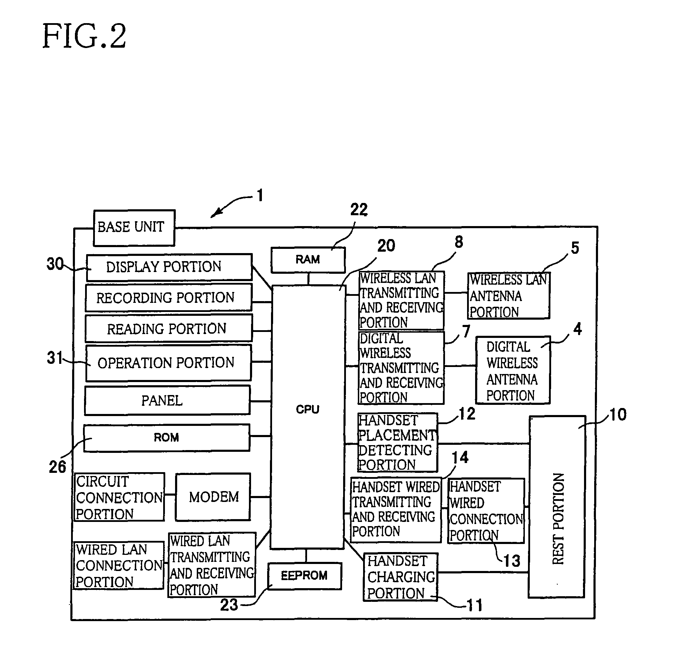

Fig. 2 is a block diagram showing a control system of the base unit 1. A CPU 20 controls operations of the base unit 1. To the CPU 20, there are connected a ROM 26 storing programs and the like for the controls of the CPU 20, an EEPROM 23 storing data about telephone numbers of communication partners, setting of the base unit 1, and the like, a RAM 22 used as a work area in which the programs and the data respectively stored in the ROM 26 and the EEPROM 23 are developed and executed, the display portion 30 for displaying a state of the communication apparatus, the operation portion 31 through which the communication apparatus is operated by the user, and the like.

When the base unit 1 receives radio waves from the handset 2, the radio waves received by the digital wireless antenna portion 4 are converted into signals by a digital wireless transmitting and receiving portion 7. Then, the signals are inputted to the CPU 20. When the base unit 1 transmits radio waves to the handset 2, signals from the CPU 20 are converted into radio waves by the digital wireless transmitting and receiving portion 7. Then, the radio waves are transmitted from the digital wireless antenna portion 4.

On the other hand, when the base unit 1 receives radio waves from the external wireless LAN device, radio waves received by the wireless LAN antenna portion 5 are converted into signals by a wireless LAN transmitting and receiving portion 8. Then, the signals are inputted to the CPU 20. When the base unit 1 transmits radio waves to the external wireless LAN device, signals from the CPU 20 are converted into radio waves by the wireless LAN transmitting and receiving portion 8. Then, the radio waves are transmitted from the wireless LAN antenna portion 5.

The base unit 1 includes eighty-nine channels each of which corresponds to a frequency band used in the communication apparatus. The communication apparatus is configured such that the base unit 1 and the handset 2 are communicable with each other through the wireless communication in a plurality of the frequency bands.

While the base unit 1 and the handset 2 are connected to each other through the wired connection, signals from the handset 2 placed on the rest portion 10 are transmitted through the handset wired connection portion 13 then through a handset wired transmitting and receiving portion 14 to the CPU 20. On the other hand, data or a command transmitted from the CPU 20 toward the handset 2 is transmitted through the handset wired transmitting and receiving portion 14 then through the handset wired connection portion 13 to the handset 2 placed on the rest portion 10.

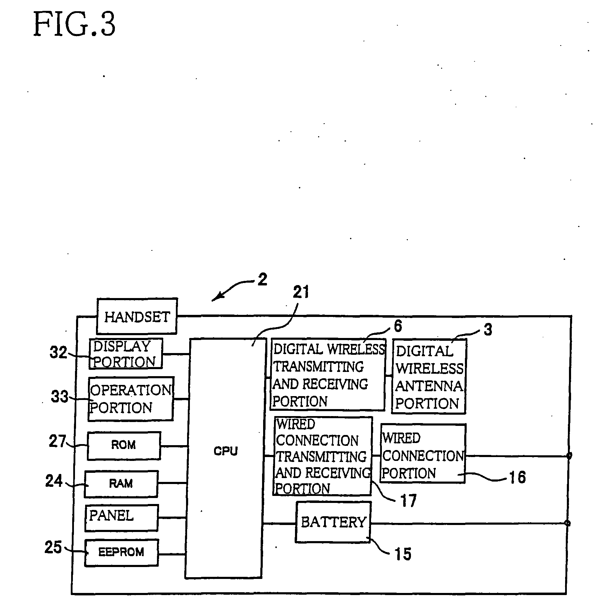

Fig. 3 is a block diagram showing a control system of the handset 2. A CPU 21 controls operations of the handset 2. To the CPU 21, there are connected a ROM 27 storing programs and the like for the control of the CPU 21, an EEPROM 25 storing data about telephone numbers of communication partners, setting of the handset 2, and the like, a RAM 24 used as a work area in which the programs and the data respectively stored in the ROM 27 and the EEPROM 25 are developed and executed, the display portion 32 for displaying the state of the handset 2, the operation portion 33 through which the handset 2 is operated by the user, and the like.

When the handset 2 receives radio waves from the base unit 1, the radio waves received by the digital wireless antenna portion 3 are converted into signals by a digital wireless transmitting and receiving portion 6. Then, the signals are inputted to the CPU 21. When the handset 2 transmits radio waves to the base unit 1, signals from the CPU 21 are converted into radio waves by the digital wireless transmitting and receiving portion 6. Then, the radio waves are transmitted from the digital wireless antenna portion 3.

The handset 2 is provided with a wired connection portion 16, a wired connection transmitting and receiving portion 17, and a battery 15 which is charged by the handset charging portion 11. The wired connection portion 16 is connected to the handset wired connection portion 13 mounted to the rest portion 10 of the base unit 1 so as to establish the wired connection between the handset 2 and the base unit 1.

Hereinafter, there will be explained processings performed by the communication apparatus with reference to flow-charts and the like.

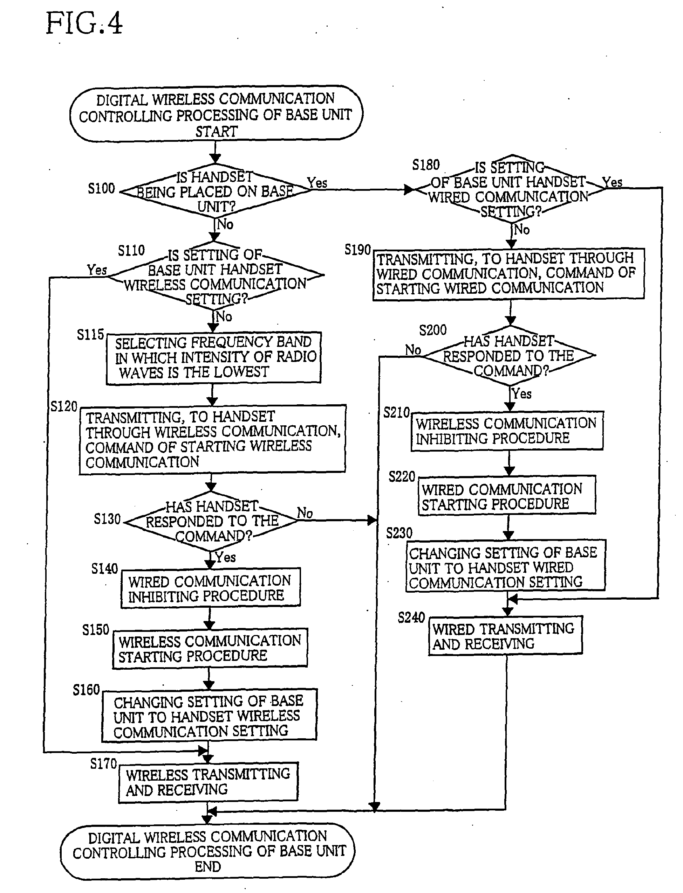

Fig. 4 is a flow-chart indicating a flow of a digital wireless communication controlling processing of the base unit 1. Initially, in S100, the CPU 20 judges whether the handset 2 is being placed on the base unit 1. Where the CPU 20 judges that the handset 2 is not being placed on the base unit 1 (S100: No), the CPU 20 judges, in S110, whether a setting of the base unit 1 is a handset wireless communication setting for communicating with the handset 2 through the wireless communication. Where the CPU 20 judges that the setting of the base unit 1 is the handset wireless communication setting (S110: Yes), the flow goes to S170 in which the CPU 20 performs a wireless transmitting and receiving in which data or the like is transmitted and received through the wireless communication. Then, the digital wireless communication controlling processing of the base unit 1 is completed.

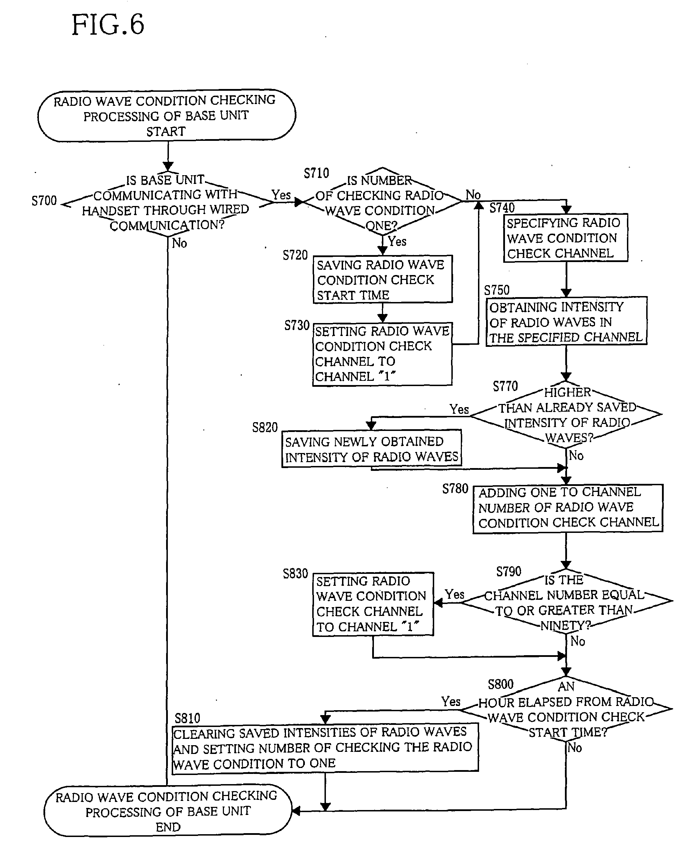

On the other hand, where the CPU 20 judges that the setting of the base unit 1 is not the handset wireless communication setting (S110: No), the CPU 20 selects, in S115, on the basis of recorded data that is a result of a measurement in a radio wave condition checking processing shown in Fig. 6, one of the frequency bands in which intensity of the radio waves (i.e., electric field intensity) is the lowest among the frequency bands. The frequency band corresponds to one of the channels in which the handset 2 and the base unit 1 are to communicate with each other through the wireless communication. Then, in S120, the CPU 20 transmits, to the handset 2 through the wireless communication, a command of starting the wireless communication in the one of the channels which corresponds to the selected frequency band.

Next, in S130, the CPU 20 judges whether the handset 2 has responded to the command. Where the CPU 20 judges that the handset 2 has responded to the command (S130: Yes), the CPU 20 executes, in S140, a wired communication inhibiting procedure for inhibiting the wired communication. Where the handset 2 has not responded to the command (S130: No), the digital wireless communication controlling processing of the base unit 1 is completed.

After executing the wired communication inhibiting procedure in S140, the CPU 20 executes, in S150, a wireless communication starting procedure for starting the wireless communication between the handset 2 and the base unit 1. Then, in S160, the CPU 20 changes the setting of the base unit 1 from a handset wired communication setting for communicating with the handset 2 through the wired communication, to the handset wireless communication setting. Subsequently, the flow goes to S170 in which the CPU 20 performs the wireless transmitting and receiving. Then, the digital wireless communication controlling processing of the base unit 1 is completed.

Where the handset 2 is being placed on the base unit 1 in S100 (S100: Yes), the CPU 20 judges, in S180, whether the setting of the base unit 1 is the handset wired communication setting. Where the CPU 20 judges that the setting of the base unit 1 is the handset wired communication setting (S180: Yes), the flow goes to S240 in which the CPU 20 performs a wired transmitting and receiving in which data or the like is transmitted and received through the wired communication. Then, the digital wireless communication controlling processing of the base unit 1 is completed.

On the other hand, where the setting of the base unit 1 is not the handset wired communication setting (S180: No), the CPU 20 transmits, in S190, to the handset 2 through the wired communication, a command of starting the wired communication.

Next, in S200, the CPU 20 judges whether the handset 2 has responded to the command. Where the CPU 20 judges that the handset 2 has responded to the command (S200: Yes), the CPU 20 executes, in S210, a wireless communication inhibiting procedure for inhibiting the wireless communication. Where the CPU 20 judges that the handset 2 has not responded to the command (S200: No), the digital wireless communication controlling processing of the base unit 1 is completed.

After executing the wireless communication inhibiting procedure in S210, the CPU 20 executes, in S220, a wired communication starting procedure for starting the wired communication between the handset 2 and the base unit 1. Then, in S230, the CPU 20 changes the setting of the base unit 1 from the handset wireless communication setting to the handset wired communication setting. Subsequently, the flow goes to S240 in which the CPU 20 performs the wired transmitting and receiving. Then, the digital wireless communication controlling processing of the base unit 1 is completed.

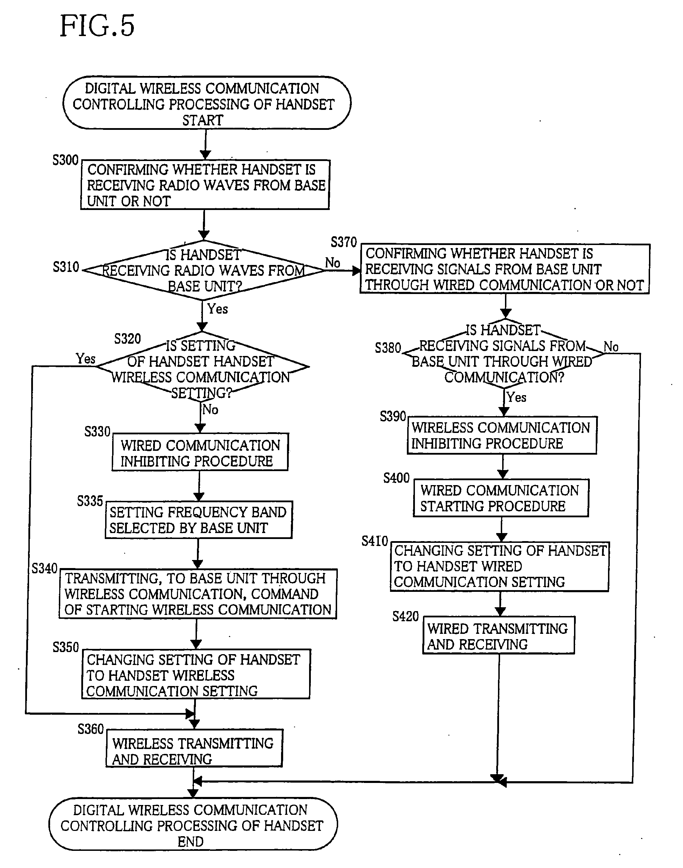

Fig. 5 is a flow-chart indicating a flow of a digital wireless communication controlling processing of the handset 2. Initially, in S300, the CPU 21 confirms whether the handset 2 is receiving radio waves from the base unit 1. Where the CPU 21 judges the handset 2 is receiving the radio waves from the base unit 1 (S310: Yes), the CPU 21 judges, in S320, whether a setting of the handset 2 is a handset wireless communication setting for communicating with the base unit 1 through the wireless communication. Where the setting of the handset 2 is the handset wireless communication setting (S320: Yes), the flow goes to S360 in which the CPU 21 performs a wireless transmitting and receiving in which data or the like is transmitted and received through the wireless communication. Then, the digital wireless communication controlling processing of the handset 2 is completed.

On the other hand, where the setting of the handset 2 is not the handset wireless communication setting (S320: No), the CPU 21 executes, in S330, a wired communication inhibiting procedure for inhibiting the wired communication. Then, in S335, the CPU 21 sets, on the basis of the command transmitted from the base unit 1 in S120, the frequency band which is selected by the base unit 1 in S115. The frequency band corresponds to one of the channels in which the handset 2 and the base unit 1 are to communicate with each other through the wireless communication. Subsequently, in S340, the CPU 21 transmits, to the base unit 1 through the wireless communication, a command of starting the wireless communication.

Next, in S350, the CPU 21 changes the setting of the handset 2 from a handset wired communication setting for communicating with the base unit 1 through the wired communication, to the handset wireless communication setting. Subsequently, the flow goes to S360 in which the CPU 21 performs the wireless transmitting and receiving. Then, the digital wireless communication controlling processing of the handset 2 is completed.

Where the CPU 21 judges, in S310, that the handset 2 is not receiving the radio waves from the base unit 1 (5310: No), the CPU 21 confirms, in S370, whether the handset 2 is receiving signals from the base unit 1 through the wired communication. Where the CPU 21 judges, in S380, that the handset 2 is not receiving the signals from the base unit 1 through the wired communication (S380: No), the digital wireless communication controlling processing of the handset 2 is completed.

Where the CPU 21 judges, in S380, that the handset 2 is receiving the signals from the base unit 1 through the wired communication (S380: Yes), the flow goes to S390 in which the CPU 21 executes a wireless communication inhibiting procedure for inhibiting the wireless communication.

Next, the flow goes to S400 in which the CPU 21 executes a wired communication starting procedure for starting the wired communication between the handset 2 and the base unit 1. After the CPU 21 changes, in S410, the setting of the handset 2 to the handset wired communication setting, the flow goes to S420 in which the CPU 21 starts a wired transmitting and receiving. Then, the digital wireless communication controlling processing of the handset 2 is completed.

In view of these processings, the communication apparatus is configured such that the handset 2 is communicable with the base unit 1 through the wired connection instead of the wireless communication therebetween when the handset 2 is placed on the rest portion 10 of the base unit 1. More specifically, the communication apparatus is configured such that the handset 2 is communicable with the external device via the base unit 1 through the wired connection between the handset 2 and the base unit 1 instead of the wireless communication therebetween when the handset 2 is placed on the rest portion 10 of the base unit 1.

When a communication state between the base unit 1 and the handset 2 is changed from the wired communication to the wireless communication, one of the channels in which a condition of radio waves is relatively good may be predetermined to promptly or smoothly start the wireless communication. Fig. 6 is a flow-chart indicating a flow of the above-mentioned radio wave condition checking processing of the base unit 1 when the base unit 1 and the handset 2 are being communicating with each other through the wired communication. This radio wave condition checking processing is repeatedly performed. In this processing, intensity of the radio waves around the communication apparatus is measured in each of the frequency bands on condition that the handset 2 is being placed on the rest portion 10 of the base unit 1. The measured intensities of the radio waves are recorded or saved in the RAM 22 of the base unit 1 as data. When the wireless communication is started by a user removing the handset 2 from the rest portion 10, one of the frequency bands in which intensity of the radio waves is the lowest may be used to establish the wireless communication in the frequency band in which the radio wave condition is relatively good.

Initially, in S700, the CPU 20 checks the communication state between the base unit 1 and the handset 2. Where the base unit 1 is communicating with the handset 2 through the wireless communication (S700: No), the CPU 20 completes the radio wave condition checking processing.

Where the base unit 1 is communicating with the handset 2 through the wired communication (S700: Yes), the CPU 20 judges, in S710, whether the radio wave condition is checked for the first time. That is, the CPU 20 judges, in S710, whether a number of checking the radio wave condition is one. Where the number of checking the radio wave condition is one (S710: Yes), the CPU 20 saves, in S720, current time as time at which the check of the radio wave condition is started. It is noted that the time will be referred to as radio wave condition check start time.

Next, in S730, the CPU 20 sets, to a channel "1", one of the channels in which the radio wave condition is checked. It is noted that the channel in which the radio wave condition is checked will be referred to as a radio wave condition check channel.

Next, in S740, the CPU 20 specifies the radio wave condition check channel. Likewise, where the check of the radio wave condition is not the first one (S710: No), the flow goes to S740 in which the radio wave condition check channel is specified.

Next, in S750, the CPU 20 measures and obtains intensity of radio waves around the communication apparatus in the specified channel using the digital wireless antenna portion 4 and the digital wireless transmitting and receiving portion 7. Then, the obtained intensity is saved in the RAM 22.

Next, in S770, the CPU 20 compares the intensity of the radio waves which has been obtained in S750 with intensity of the radio waves which has been previously obtained in the specified channel and which has already been saved in RAM 22. Where the intensity of the radio waves which is obtained in S750 is equal to or lower than the intensity of the radio waves which has already been saved (S770: No), a next channel is set, in S780, by adding one to the channel number of the radio wave condition check channel.

Next, in S790, the CPU 20 confirms a current radio wave condition check channel. Where the channel number of the radio wave condition check channel which has been set is less than ninety (S790: No), the CPU 20 judges, in S800, whether an hour elapsed from the radio wave condition check start time saved in S720. Where the channel number of the radio wave condition check channel which has been set is not less than ninety (S790: Yes), the CPU 20 sets, in S830, the radio wave condition check channel to the channel "1" as the first channel. Then, the CPU 20 judges, in S800, whether an hour elapsed from the radio wave condition check start time.

Where an hour does not elapse from the radio wave condition check start time saved in S720 (S800: No), the CPU 20 completes the radio wave condition checking processing. Where an hour elapsed from the radio wave condition check start time saved in S720 (S800: Yes), the CPU 20 clears the saved intensities of the radio waves and sets the number of checking the radio wave condition to one (S810). Then, the radio wave condition checking processing is completed.

Where the intensity of the radio waves which is obtained in S750 is, in S770, higher than the intensity of the radio waves which has already been saved (S770: Yes), the intensity of the radio waves which is obtained in S750 is saved in RAM 22 (S820). Then, in S780, the next channel is set by adding one to the channel number of the radio wave condition check channel. That is, the CPU 20 measures, by performing this processing, intensity of the radio waves around the communication apparatus in each of the frequency bands on condition that the handset 2 is being placed on the rest portion 10 of the base unit 1.

In view of the above, the CPU 20 may be considered to include a radio wave intensity measuring section which is configured to measure the intensity of radio waves around the communication apparatus in each of the frequency bands, and which is constituted by a portion of the CPU 20 for executing S750. More specifically, the radio wave intensity measuring section may be considered to be configured to measure the intensity of the radio waves around the communication apparatus in each of the frequency bands on condition that the handset 2 is being placed on the rest portion 10 of the base unit 1.

Further, in view of this radio wave intensity measuring section and the above-described digital wireless communication controlling processing of the base unit 1, the CPU 20 may be considered to further include a frequency band selecting section which is configured to select, on the basis of a result of the measurement of the radio wave intensity measuring section, one of the frequency bands in which the handset 2 and the base unit 1 are to communicate with each other through the wireless communication, and which is constituted by a portion of the CPU 20 for executing S115. More specifically, the frequency band selecting section may be considered to be configured to select one of the frequency bands in which the intensity of the radio waves is the lowest, as the frequency band in which the handset 2 and the base unit 1 are to communicate with each other through the wireless communication.

According to the above-described processing, a maximum value of the intensity of the radio waves (i.e., the electric field intensity) within an hour is saved for each of frequency bands. Then, one of the frequency bands in which the saved maximum value of the intensity of the radio waves is the smallest is selected. Thus, even when the communication state is changed from the wired communication to the wireless communication, interference of the radio waves may be prevented as much as possible.

In the wireless communication, the base unit 1 frequently transmits the radio waves to the handset 2 in order to check a position of the handset 2. When the base unit 1 and the handset 2 are connected to each other through the wired connection, the wireless communication between the base unit 1 and the handset 2 is inhibited, and the base unit 1 and the handset 2 are connected only through the wired connection. Thus, the radio waves generated by the communication apparatus do not interfere with radio waves generated by wireless apparatuses around the communication apparatus, that is, the radio waves generated by the communication apparatus do not adversely and severely affect the wireless apparatuses which carry out a communication via, e.g., a wireless LAN, thereby allowing a user to comfortably use the wireless apparatuses.

As described above, one of the frequency bands in which the interference of the radio waves occurs least frequently is selected when the handset 2 is removed from the rest portion 10 to establish the wireless communication between the base unit 1 and the handset 2. Thus, there may be provided a communication apparatus which achieves a good phone conversation in which conversation voice is not interrupted as much as possible in a voice communication between the base unit 1 and the handset 2.

Further, the communication apparatus may be modified such that the base unit 1 and the handset 2 may communicate with each other through the wired communication by the handset placement detecting portion 12 detecting the placement of the handset 2. Providing an independent connect detecting portion eliminates a need for adding a step in which the connection between the base unit 1 and the handset 2 is checked using signals passing through a connecting portion. Thus, a communication procedure between the base unit 1 and the handset 2 may be simplified.

Furthermore, in the above-described embodiment, the CPU 20 of the base unit 1 selects, in S115, one of the frequency bands in which intensity of the radio waves is the lowest, as the frequency band in which the handset 2 and the base unit 1 are to communicate with each other through the wireless communication, and transmits, in S120, to the handset 2, the command of starting the wireless communication in the selected frequency band. Then, in S335, the CPU 21 of the handset 2 sets, on the basis of the command transmitted by the base unit 1 in S120, the frequency band which is selected by the base unit 1 in S115, as the frequency band in which the handset 2 and the base unit 1 are to communicate with each other through the wireless communication. However, as another modification, the CPU 20 may select the one of the frequency bands in which intensity of the radio waves is the lowest, e.g., between S140 and S150. In this case, the base unit 1 transmits radio waves in the selected frequency band. When receiving the radio waves, the handset 2 is set so as to be communicable with the base unit 1 in the frequency band selected by the same 1.

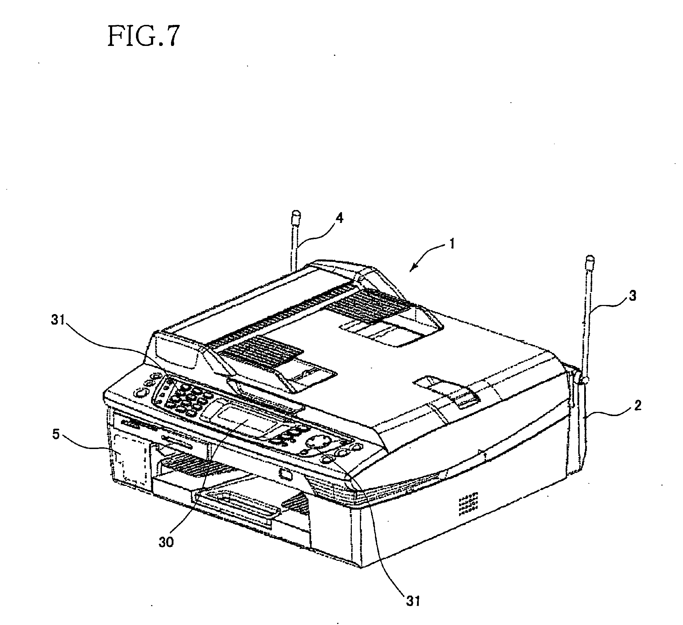

Furthermore, a communication apparatus in the form of a multi-function apparatus may be used as another embodiment of the present invention in place of the above-described communication apparatus in the form of the wireless phone. Fig. 7 is a perspective view of the communication apparatus in the form of the multi-function apparatus. In this embodiment, a main device 1 and a wireless (cordless) device 2 are used respectively instead of the base unit 1 and the handset 2 in the above-described embodiment. This embodiment is identical with the above-described embodiment in the other configurations, and an explanation of which is dispensed with. In addition, the same effects as those explained in the above-described embodiment can be obtained in this embodiment.

## Claims

1. A communication apparatus including, a main device (1) having a rest portion (10) and communicable with an external device, and a wireless device (2) which is permitted to be placed on the rest portion and is communicable with the main device through a wireless communication so as to be communicable with the external device via the main device, the communication apparatus being **characterized in that**:
the communication apparatus is configured to establish a wired connection between the wireless device and the main device when the wireless device is placed on the rest portion of the main device.

2. The communication apparatus according to claim 1, configured to establish the wired connection between the wireless device and the main device such that the wireless device and the main device are communicable with each other through a wired communication, when the wireless device is placed on the rest portion of the main device.

3. The communication apparatus according to claim 1 or 2, configured such that the wireless device is communicable with the external device via the main device through the wired connection between the wireless device and the main device instead of the wireless communication therebetween when the wireless device is placed on the rest portion of the main device.

4. The communication apparatus according to any one of claims 1 to 3, configured to be communicable with the external device through a voice communication.

5. The communication apparatus according to any one of claims 1 to 4,
wherein the main device and the wireless device are a base unit (1) and a handset (2), respectively.

6. The communication apparatus according to claim 5,
wherein the communication apparatus is a wireless phone.

7. The communication apparatus according to any one of claims 1 to 6, configured such that the main device and the wireless device are communicable with each other through the wireless communication in a plurality of frequency bands.

8. The communication apparatus according to claim 7, further comprising (a) a radio wave intensity measuring section (S750) configured to measure intensity of radio waves around the communication apparatus in each of the plurality of frequency bands and (b) a frequency band selecting section (S115) configured to select, on the basis of a result of the measurement of the radio wave intensity measuring section, one of the plurality of frequency bands in which the wireless device and the main device are to communicate with each other through the wireless communication.

9. The communication apparatus according to claim 8,
wherein the frequency band selecting section is configured to select one of the plurality of frequency bands in which the intensity of the radio waves is the lowest, as the frequency band in which the wireless device and the main device are to communicate with each other through the wireless communication.

10. The communication apparatus according to claim 8 or 9,
wherein the radio wave intensity measuring section is configured to measure the intensity of the radio waves around the communication apparatus in each of the plurality of frequency bands on condition that the wireless device is being placed on the rest portion of the main device.

11. The communication apparatus according to any one of claims 1 to 10, configured to be communicable, via a wireless LAN, with another external device different from the external device.
